# FASCICULE DE BREVET EUROPEEN

(11) **EP 1 140 468 B1**
(45) Date de publication et mention de la délivrance du brevet: **04.06.2003**
(21) Numéro de dépôt: 99966986.4
(22) Date de dépôt: 20.12.1999
(51) Int. Cl.: B29C 53/58, F16L 9/00

(54) **PROCEDE POUR IMPERMEABILISER UN OBJET EN MATIERE PLASTIQUE**
VERFAHREN ZUR ABDICHTUNG EINES GEGENSTANDES AUS KUNSTSTOFF
METHOD FOR WATERPROOFING AN OBJECT MADE OF PLASTIC MATERIAL

(30) Priorité: 23.12.1998 BE 9800930
(43) Date de publication de la demande: 10.10.2001
(73) Titulaire: SOLVAY (Société Anonyme), 1050 Bruxelles (BE)
(72) Inventeur: DEHENNAU, Claude, B-1410 Waterloo (BE)
(74) Mandataire: Decamps, Alain René François
(86) Numéro de dépôt international: EP9910259
(87) Numéro de publication internationale: WO00038903

(56) Documents cités:
- EP-A- 0 395 838
- EP-A- 0 697 273
- WO-A-91/02645
- US-A- 5 019 309
- DATABASE WPI Section Ch, Week 8847 Derwent Publications Ltd., London, GB; Class A23, AN 88-333886 XP002113387 & JP 63 246588 A (UNITIKA LTD), 13 octobre 1988 (1988-10-13)

## Description

La présente invention concerne un procédé pour imperméabiliser un objet en matière plastique.

Plus particulièrement, il concerne l'imperméabilisation d'objets, notamment des objets creux, vis-à-vis des gaz et des liquides aqueux ou organiques pouvant éventuellement contenir des corps dissous.

Diverses techniques sont connues pour conférer des propriétés barrière à des surfaces d'objets en matière plastique. Deux approches différentes ont conduit à proposer des solutions qui ont été mises en oeuvre dans les procédés de fabrication de ces objets, La première est basée sur le traitement superficiel de l'objet au moyen d'un plasma ou d'un réactif chimique tel que l'anhydride sulfurique ou le fluor gazeux susceptibles de modifier les molécules de la matière plastique situées à la surface de l'objet. Une autre approche consiste à intercaler dans l'épaisseur de la matière plastique constituant l'objet une couche comprenant une matière particulière, souvent elle-même thermoplastique, à propriété barrière vis-à-vis d'un ou de plusieurs gaz ou liquides. Dans ce dernier cas, on a fait un large usage des techniques de mise en oeuvre par co-extrusion.

A titre de matériau barrière, on utilise couramment des polymères fluorés, des polyamides, des polyacrylonitriles, des polyesters ainsi que des halogénures de polyvinylidène. L'efficacité barrière de ces matériaux n'est cependant jamais totale pour tous les types de gaz ou de liquide avec lesquels ils sont mis en contact. C'est pourquoi on a recherché des produits barrière plus efficaces que ceux cités *supra.* Des polymères à cristaux liquides (LCP) ont été proposés afin de pouvoir atteindre une imperméabilité quasi totale pour une gamme étendue de gaz et de liquides.

Dans la demande internationale de brevet WO 97/27038 on décrit par exemple un procédé pour enduire un objet allongé en matière plastique, tel qu'une fibre optique, au moyen d'un film de LCP dont les molécules ont été orientées selon deux axes différents afin d'augmenter sa résistance mécanique.

La demande de brevet EP-A2-0 395 838 divulgue un câble électrique enveloppé par une couche de polymère aramide recouvert par une couche de LCP et une gaine extérieure soudée à la couche de LCP.

La demande de brevet internationale WO-A-91/02645 divulgue une structure pouvant servir à contenir un fluide mobile ou diffusant facilement au travers des matières polymériques qui contient une couche barrière à base de LCP lyotropique biorienté qui peut être recouverte d'une couche de finition.

De telles structures restent cependant relativement fragiles et ne sont pas à l'abri de déchirures du film extérieur en LCP. Le coût relativement élevé des polymères LCP justifie la mise en oeuvre de quantités réduites de matière. Souvent cependant, l'épaisseur du film de LCP ne peut être réduite jusqu'au minimum compatible avec ses excellentes propriétés barrière, étant donné les risques de fendillement et de déchirure mécaniques des films trop minces.

L'invention a pour but de pallier ces inconvénients et de fournir un procédé qui permette l'utilisation de films ultraminces de LCP sans risque de rupture de la continuité des propriétés barrière sous l'effet de sollicitations mécaniques tout en maintenant un coût de matière et de mise en oeuvre qui ne dépasse pas celui des solutions impliquant les polymères barrière traditionnels,

A cet effet, l'invention concerne un procédé pour imperméabiliser un objet comprenant au moins une matière plastique au moyen d'une couche de polymère à cristaux liquides (LCP) selon lequel on enroule autour de l'objet une bande de LCP d'épaisseur inférieure à 0,030 mm de manière telle que les spires successives soient déposées contre la spire précédente, sans la recouvrir et on dépose une couche de finition polymérique par-dessus, le LCP étant un LCP thermotropique qui présente une structure moléculaire orientée.

L'invention s'adresse à des objets en matière plastique, c'est-à-dire des solides dans les conditions ambiantes comprenant au moins une matière polymérique, en particulier un polymère thermoplastique, Ces objets peuvent se présenter sous toutes formes et dimensions.

En particulier, l'invention s'adresse à des corps creux, c'est-à-dire des objets qui présentent au moins une surface concave, délimitant un volume fermé ou non. Des exemples de tels corps creux sont les flacons et les réservoirs destinés à contenir un gaz et/ou un liquide.

D'autres types de corps creux auxquels s'adresse avantageusement l'invention sont les tuyaux et les tubes, tels que, par exemple, les tuyaux en matière plastique à usage médical et les conduites d'alimentation en air ou en carburant des moteurs de véhicules automobiles.

L'invention convient particulièrement bien dans le cas de tubes de grand diamètre (d'au moins 0,1 m et, de préférence, d'au moins 0,2 m), tels que, par exemple, les tubes de transport d'eau potable.

Le procédé selon l'invention vise à imperméabiliser l'objet en matière plastique, en d'autres termes à lui conférer la faculté de pouvoir retenir certaines matières en contact avec sa surface et bloquer la migration de ces matières au travers de sa masse. En l'occurrence, le procédé permet de rendre les objets imperméables aux gaz et aux liquides aqueux ou organiques susceptibles d'entrer en contact avec eux. Parmi les gaz couramment rencontrés on peut citer, l'air, l'oxygène et l'anhydride carbonique. Parmi les liquides, comprenant éventuellement un soluté inorganique ou organique, on rencontre l'eau, les alcools aliphatiques et alicycliques, les hydrocarbures et, en particulier, les essences carburants pour moteurs à combustion interne et le gasoil pour moteurs Diesel. Plusieurs liquides et/ou gaz différents en mélange peuvent aussi venir en contact avec les objets à imperméabiliser.

Par polymère à cristaux liquides (Liquid Crystal Polymer ou « LCP »), on entend désigner un polymère dont les molécules se présentent dans un état fluide et ordonné dans une gamme de températures intermédiaires entre celles qui correspondent à l'état solide et celles correspondant à l'état fondu complètement désordonné (polymère thermotropique) ou encore un polymère susceptible de se présenter à l'état ordonné en solution (polymère lyotropique).

Le LCP utilisé dans le procédé selon l'invention appartient à la classe des polymères thermotropiques. De tels polymères comprennent généralement des chaînes allongées où alternent des unités rigides et des unités flexibles.

Comme exemples de polymères LCP, on peut citer : les copolyesters de l'acide p-hydroxybenzoïque et de l'acide 6-hydroxy-2-naphtoïque connus sous la marque VECTRA ® et les copolyesters de l'acide p-hydroxybenzoïque avec l'acide téréphtalique et le 4,4'-biphénol connus sous la marque XYDAR ®. Des exemples de tels polymères sont donnés dans l'ouvrage « Encyclopedia of Polymer Science and Engineering, édité par John Wiley & Sons, New-York, 1987 Vol. 9, pages 1 à 61 et en particulier les polyesters des tableaux 12 (pages 50 et 51) et 13 (page 52).

Tout particulièrement préférés sont les LCP capables de pouvoir former des films de faible épaisseur (< 0,030 mm et, de préférence, <0,020 mm).

Par bande mince de LCP, on désigne un film de LCP de largeur ne dépassant pas 0,5 m et d'épaisseur faible telle que décrite ci-dessus. Les bandes de LCP dont l'épaisseur n'excède pas 0,015 mm sont particulièrement préférées. Selon l'invention, on enroule la bande mince de LCP à spires jointives autour de l'objet à imperméabiliser, c'est-à-dire de manière telle que les spires successives soient déposées contre la spire précédente, sans la recouvrir.

Lorsque l'objet à imperméabiliser présente une symétrie de révolution, on peut avantageusement enrouler la bande de LCP selon une direction qui fait un angle aigu avec la direction de l'axe de révolution de l'objet. Cet angle doit être imposé de telle sorte que, compte tenu de la largeur de la bande de LCP, deux spires adjacentes soient toujours jointives. De préférence, cet angle est choisi ne dépassant pas 95 degrés. Il convient que cet angle ne soit par ailleurs pas inférieur à 60 degrés et, de préférence, pas inférieur à 75 degrés.

Pour enrouler la bande de LCP autour de l'objet, on peut utiliser toute technique connue comme, par exemple, faire usage d'enrouleuses semblables à celles utilisées dans la fabrication de câbles électriques ou de fibres de verre, ou encore dans les activités de protection de tubes métalliques ou de tubes en matière plastique.

Selon l'invention, on dépose par-dessus la bande de LCP une couche de finition polymérique qui comprend au moins une matière plastique thermoplastique.

Par matière plastique thermoplastique on entend désigner tout type de résine synthétique thermoplastique obtenue par polymérisation ou par polycondensation. Des exemples de résines de polycondensation sont les polyamides et les polyesters, en particulier les polyamides PA6, PA11 et PA12. Des exemples de résines de polymérisation sont les résines polyvinyliques et en particulier le polychlorure de vinyle, les polyoléfines telles que le polyéthylène et le polypropylène et les copolymères de ces résines, en particulier les copolymères éthylène-butène et éthylène-hexène. On peut aussi utiliser des mélanges de matières plastiques de nature différente, en ce compris des mélanges de résines obtenues par polycondensation avec des résines obtenues par polymérisation. Le polyéthylène et, en particulier, le polyéthylène haute densité est généralement préféré.

La nature du polymère de la couche de finition est avantageusement choisie identique, ou tout au moins de la même famille chimique que celle du polymère de l'objet à imperméabiliser, pour faciliter le recyclage des matières plastiques en fin de vie de l'objet.

Le rôle de la couche de finition est multiple. Outre une protection mécanique de la couche de LCP contre les chocs, elle permet également dans certains cas de réalisation d'objets particuliers de calibrer les dimensions de ceux-ci. Dans le cas d'objets de symétrie de révolution, comme par exemple dans le cas des tuyaux et des tubes, la couche de finition permet le calibrage précis du diamètre extérieur.

La couche de finition est déposée sur l'objet à imperméabiliser par tout type de technique compatible avec les formes et dimensions de cet objet. On peut aussi bien faire appel à des techniques de dépose continues que discontinues. De préférence, la dépose de la couche de finition a lieu immédiatement après l'enroulement des bandes minces de LCP sur l'objet à imperméabiliser.

Selon un mode de réalisation particulier de l'invention, on met en oeuvre des bandes de LCP qui présentent une structure moléculaire multiorientée. De préférence, on fait usage de bandes de LCP dont la structure moléculaire est orientée dans deux directions différentes.

Selon une variante au procédé selon l'invention, on utilise une bande mince de LCP qui a été au préalable enduite, sur au moins une de ses faces, d'une couche polymérique comprenant au moins un adhésif.

De préférence, on utilise une bande qui a été au préalable enduite d'une couche polymérique comprenant au moins un adhésif sur chacune de ses deux faces.

Par adhésif, on entend désigner tout adhésif compatible avec les constituants de la bande mince de LCP. L'adhésif le plus employé est généralement un adhésif polymère se présentant sous la forme d'une polyoléfine fonctionnalisée. Par polyoléfine fonctionnalisée, on entend désigner toute polyoléfine comprenant, outre des unités dérivées d'oléfines, des unités monomériques fonctionnelles. Celles-ci peuvent être incorporées soit dans la chaîne principale de la polyoléfine, soit dans ses chaînes latérales. Elles peuvent également être incorporées directement dans le squelette de ces chaînes principales et latérales, par exemple par copolymérisation d'un ou de plusieurs monomères fonctionnels avec le ou les monomères oléfiniques ou encore résulter du greffage d'un ou des plusieurs monomères fonctionnels sur lesdites chaînes, ultérieurement à la fabrication de la polyoléfine. Plusieurs polyoléfines fonctionnalisées peuvent aussi être utilisées en mélange.

On choisit les unités monomériques fonctionnelles de la polyoléfine fonctionnalisée parmi les acides carboxyliques, les diacides carboxyliques et les anhydrides correspondant à ces diacides. Ces unités monomériques proviennent généralement de la copolymérisation ou du greffage d'au moins un monomère insaturé possédant les mêmes fonctions. Des exemples de monomères utilisables sont, non limitativement, l'acide acrylique, l'acide méthacrylique, l'acide maléique, l'acide fumarique, l'acide itaconique, l'anhydride maléique, l'anhydride fumarique et l'anhydride itaconique. De préférence, les unités monomériques fonctionnelles proviennent de la copolymérisation ou du greffage d'anhydride maléique.

De préférence, on utilise une bande mince de LCP enduite sur chacune de ses deux faces d'au moins une couche polymérique comprenant au moins un adhésif. Dans ce cas, on peut utiliser le(s) même(s) adhésif(s) dans les couches polymériques enduisant les deux faces de LCP. On peut aussi utiliser pour l'enduction d'une des faces de la bande mince de LCP une couche polymérique comprenant au moins un adhésif différent de celui ou ceux utilisés dans la couche polymérique enduisant l'autre face.

Une autre variante au procédé selon l'invention consiste à déposer une couche polymérique comprenant au moins un adhésif sur l'objet à imperméabiliser lui-même, avant d'enrouler la bande mince de LCP.

La nature de l'adhésif utilisé est la même que celle déjà décrite plus haut en ce qui concerne les adhésifs utilisés dans les couches polymériques destinées à l'enduction de la bande mince de LCP.

La mise en oeuvre de cette variante n'implique nullement que l'on ne puisse pas aussi enduire la bande mince de LCP, au moins sur une de ses faces, avec une couche polymérique comprenant au moins un adhésif, comme déjà décrit plus haut. Cependant, on préfère, lorsqu'on met en oeuvre la variante du dépôt d'une couche polymérique comprenant au moins un adhésif sur l'objet à imperméabiliser, utiliser une bande mince de LCP qui n'a pas été enduite au préalable par une couche polymérique comprenant au moins un adhésif, tout au moins du côté de la face de la bande mince jouxtant l'objet à imperméabiliser.

Une autre variante au procédé selon l'invention est encore de déposer une couche polymérique comprenant au moins un adhésif par-dessus la bande mince de LCP, avant de déposer la couche de finition. Dans cette variante, l'adhésif est sélectionné parmi ceux qui conviennent à la fois pour le LCP et le polymère présent dans la couche de finition. La nature de l'adhésif peut aussi appartenir à la même classe d'adhésifs que l'un de ceux utilisés éventuellement dans une couche d'enduction de la bande de LCP ou pour la couche éventuelle comprenant au moins un adhésif déposée directement sur l'objet à imperméabiliser.

Selon une autre variante du procédé conforme à l'invention, la couche de finition est double en ce qu'elle est une structure bicouche formée d'une couche intérieure comprenant au moins un adhésif et d'une couche extérieure comprenant au moins un polymère thermoplastique. Les polymères thermoplastiques sélectionnés parmi les polyoléfines et les polyhalogénures de vinyle ont donné d'excellents résultats à titre de polymères de la couche extérieure.

Le procédé selon l'invention s'applique parfaitement à l'imperméabilisation d'un corps allongé, en particulier lorsque celui-ci a été obtenu préalablement par extrusion.

Le corps allongé peut avoir été fabriqué dans un procédé et à une époque antérieure complètement distincts du procédé d'imperméabilisation.

Il peut aussi, au contraire être fabriqué dans une étape précédant immédiatement le procédé d'imperméabilisation, voire dans la même ligne de fabrication.

Dans le cas de corps allongés, une forme de réalisation avantageuse de la dépose de la couche de finition fait intervenir une bague traversée par l'objet à imperméabiliser, la section d'entrée de la bague étant plus grande que la section de sortie. Selon cette forme de réalisation, on alimente la section d'entrée de la bague avec la matière polymérique de la couche de finition au moyen d'un dispositif de surextrusion, par exemple tel que décrit dans le brevet belge N° 1008711 au nom de SOLVAY.

Le procédé selon l'invention est bien adapté à l'imperméabilisation de corps allongés prenant la forme de tubes. Il est tout particulièrement bien adapté au cas des tubes de grand diamètres, comme par exemple, ceux de diamètre supérieurs à 0,2 m.

L'invention concerne aussi l'utilisation du procédé décrit *supra* pour la fabrication de tubes imperméables destinés au transport d'eau potable au travers de sols pollués par des contaminants, en particulier par des contaminants dont la présence rend l'eau impropre à la consommation humaine ou animale.

L'exemple qui suit a pour but d'illustrer l'intérêt d'utiliser une bande mince de LCP enduite au préalable d'une couche polymérique comprenant au moins un adhésif. Il a été réalisé sur des objets plans en polyéthylène haute densité (HDPE) et n'est pas conforme à l'objet de la revendication 1.

On a d'abord fabriqué un film de HDPE par pressage de polyéthylène en granules de marque ELTEX ® B4020 à 190 °C. On a ensuite fabriqué une plaque à 3 couches par pressage de granules d'adhésif de marque LOTADRR ® AX8900 (terpolymère d'éthyléne, d'acrylate de méthyle et de méthacrylate de glycidile) contenant 32 % de comonomères entre le film de HDPE précédemment obtenu et un film de LCP fourni par la firme SUPEREX (LCP orienté dans une filière contrarotative tournante). On a appliqué la pression à 210 °C sous 200 bar pendant 2 minutes.

Après refroidissement, on a essayé de délaminer les différentes couches. A chaque tentative, le film de LCP s'est cassé avant que l'on ait pu le délaminer.

Un essai de comparaison effectué comme ci-dessus, mais sans couche d'adhésif intermédiaire a permis un délaminage extrêmement facile en raison de l'absence d'adhérence du film de LCP sur le film de HDPE.

## Revendications

1. Procédé pour imperméabiliser un objet comprenant au moins une matière polymérique au moyen d'une couche de polymère à cristaux liquides (LCP), selon lequel on enroule autour de l'objet une bande de LCP d'épaisseur inférieure à 0,030 mm de manière telle que les spires successives soient déposées contre la spire précédente, sans la recouvrir et qu'on dépose une couche de finition polymérique par-dessus, **caractérisé en ce que** le LCP est un LCP thermotropique qui présente une structure moléculaire biorientée.

2. Procédé selon la revendication précédente, **caractérisé en ce que** la bande mince de LCP est enduite, sur au moins une de ses faces, d'une couche polymérique comprenant au moins un adhésif.

3. Procédé selon une quelconque des revendications précédentes, **caractérisé en ce qu'**on dépose une couche polymérique comprenant au moins un adhésif sur l'objet à imperméabiliser avant d'enrouler la bande mince de LCP.

4. Procédé selon une quelconque des revendications précédentes, **caractérisé en ce qu'**on dépose une couche polymérique comprenant au moins un adhésif par-dessus la bande mince de LCP avant de déposer la couche de finition.

5. Procédé selon une quelconque des revendications précédentes, **caractérisé en ce que** la couche de finition est une structure bicouche formée d'une couche intérieure comprenant au moins un adhésif et d'une couche extérieure comprenant au moins un polymère sélectionné parmi les polyoléfines et les polyhalogénures de vinyle,

6. Procédé selon une quelconque des revendications précédentes, **caractérisé en ce que** l'objet est un corps allongé préalablement obtenu par extrusion.

7. Procédé selon la revendication 6, **caractérisé en ce que** la couche de finition est déposée à l'intervention d'une bague traversée par l'objet à imperméabiliser et dont la section d'entrée est plus grande que la section de sortie, la bague étant alimentée avec la matière polymérique de la couche de finition au moyen d'un dispositif de surextrusion.

8. Procédé selon la revendication 6 ou 7, **caractérisé en ce que** le corps allongé est un tube.

9. Utilisation d'un tube imperméabilisé selon la revendication 8 pour le transport d'eau potable au travers de sols pollués.

## Patentansprüche

1. Verfahren zum Abdichten eines Gegenstands, der wenigstens einen Kunststoff umfasst, mittels einer Schicht aus Flüssigkristallpolymer. (LCP), gemäß dem man um den Gegenstand ein LCP-Band mit einer Dicke kleiner als 0,030 mm derart herumwickelt, dass die aufeinanderfolgenden Wicklungen an der vorhergehenden Wicklung angeordnet sind, ohne sie zu bedecken, und dass man darüber eine Polymerdeckschicht aufbringt, **dadurch gekennzeichnet, dass** das LCP ein thermotropes LCP ist, das eine biorientierte Molekularstruktur aufweist.

2. Verfahren gemäß dem vorhergehenden Anspruch, **dadurch gekennzeichnet, dass** das dünne LCP-Band auf wenigstens einer seiner Seiten mit einer Polymerschicht, die wenigstens ein Haftmittel umfasst, beschichtet ist.

3. Verfahren gemäß einem der vorhergehenden Ansprüche, **dadurch gekennzeichnet**, das man eine Polymerschicht, die wenigstens ein Haftmittel umfasst, auf dem abzudichtenden Gegenstand aufbringt, bevor man das dünne LCP-Band herumwickelt.

4. Verfahren gemäß einem der vorhergehenden Ansprüche, **dadurch gekennzeichnet, dass** man eine Polymerschicht, die wenigstens ein Haftmittel umfasst, über dem dünnen LCP-Band aufbringt, bevor man die Deckschicht aufbringt.

5. Verfahren gemäß einem der vorhergehenden Ansprüche, **dadurch gekennzeichnet, dass** die Deckschicht eine Zweischichtstruktur ist, die gebildet wird aus einer inneren Schicht, die wenigstens ein Haftmittel umfasst, und einer äußeren Schicht, die wenigstens ein unter den Polyolefinen und den Polyvinylhalogeniden ausgewähltes Polymer umfasst.

6. Verfahren gemäß einem der vorhergehenden Ansprüche, **dadurch gekennzeichnet, dass** der Gegenstand ein länglicher Körper ist, der zuvor durch Extrusion erhalten wird.

7. Verfahren gemäß Anspruch 6, **dadurch gekennzeichnet, dass** die Deckschicht unter Beteiligung eines Rings, den der abzudichtende Gegenstand durchläuft und dessen Eingangsquerschnitt größer als der Austrittsquerschnitt ist, wobei der Ring mit dem Kunststoff der Deckschicht gespeist wird, mittels einer Vorrichtung zum Beschichten aufgebracht wird.

8. Verfahren gemäß Anspruch 6 oder 7, **dadurch gekennzeichnet, dass** der längliche Körper ein Rohr ist.

9. Verwendung eines gemäß Anspruch 8 abgedichteten Rohrs für den Transport von Trinkwasser durch verseuchte Böden.

## Claims

1. Process for making an article comprising at least one polymeric material impermeable by means of a layer of liquid-crystal polymer (LCP), in which an LCP tape having a thickness of less than 0.030 mm is wound around the article in such a way that each successive turn is deposited against the previous turn, without overlapping it, and in that a polymeric topcoat is deposited on top of it, **characterized in that** the LCP is a thermotropic LCP which has a biaxially oriented molecular structure.

2. Process according to the preceding claim, **characterized in that** the thin LCP tape is coated, on at least one of its sides, with a polymeric layer comprising at least one adhesive.

3. Process according to any one of the preceding claims, **characterized in that** a polymeric layer comprising at least one adhesive is deposited on the article to be made impermeable before the thin LCP tape is wound.

4. Process according to any one of the preceding claims, **characterized in that** a polymeric layer comprising at least one adhesive is deposited on top of the thin LCP tape before the topcoat is deposited.

5. Process according to any one of the preceding claims, **characterized in that** the topcoat has a bilayer structure formed from an inner layer comprising at least one adhesive and an outer layer comprising at least one polymer selected from polyolefins and polyvinyl halides.

6. Process according to any one of the preceding claims, **characterized in that** the article is an elongate body obtained beforehand by extrusion.

7. Process according to Claim 6, **characterized in that** the topcoat is deposited by the use of a ring. through which the article to be made impermeable passes and the entry cross section of which is larger than the exit cross section, the ring being supplied with the polymeric material of the topcoat by means of an overextrusion device.

8. Process according to Claim 6 or 7, **characterized in that** the elongate body is a pipe.

9. Use of an impermeablized pipe according to Claim 8 for transporting potable water through polluted soil.
